# FASCICULE DE BREVET EUROPEEN

(11) **EP 2 264 521 B1**
(45) Date de publication et mention de la délivrance du brevet: **29.02.2012**
(21) Numéro de dépôt: 10166389.6
(22) Date de dépôt: 17.06.2010
(51) Int. Cl.: G03B 21/58

(54) **Rétroprojecteur**
Rückprojektor
Rear projector

(30) Priorité: 19.06.2009 FR 0954154
(43) Date de publication de la demande: 22.12.2010
(73) Titulaire: Commissariat à l'Énergie Atomique et aux Énergies Alternatives, 75015 Paris (FR)
(72) Inventeur: Templier, François, 38500 VOIRON (FR); Mourey, Bruno, 38500 COUBLEVIE (FR)
(74) Mandataire: Colombo, Michel

(56) Documents cités:
- WO-A1-2009/064438
- WO-A2-2008/059345
- GB-A- 399 931
- US-A1- 2006 187 544
- US-A1- 2006 234 784
- US-A1- 2009 122 400

## Description

L'invention concerne un rétroprojecteur.

Des rétroprojecteurs connus comportent :
- un écran équipé d'un cadre et d'une toile translucide tendue sur ce cadre, la toile translucide présentant une face avant sur laquelle s'affichent les images et une face arrière sur laquelle sont projetées les images, et
- un appareil de projection des images sur la face arrière de la toile translucide.
De l'état de l'art est également divulgué dans la demande de brevet WO 2008059345.

On désigne ici par «rétroprojecteur» des appareils dans lesquels l'image devient visible par le spectateur directement après avoir traversé la toile translucide. Ces rétroprojecteurs sont différents des appareils dans lesquels l'image est projetée sur un écran opaque. En effet, dans ce dernier cas, l'image projetée est visible pour le spectateur qu'après avoir été réfléchie sur l'écran opaque.

Ici, on désigne par « toile translucide », une toile qui diffusé, du côté de sa face avant, l'image projetée sur sa face arrière de manière à la rendre directement perceptible par un être humain placé devant cette toile. A cet effet, par exemple, la toile comporte des agents diffusant la lumière de manière à provoquer une ouverture angulaire du faisceau de lumière projeté sur sa face arrière lorsque ce faisceau traverse la toile. Cette ouverture angulaire du faisceau est par exemple provoquée par des diffractions multiples.

Il existe de nombreuses applications pour les rétroprojecteurs. Par exemple, les rétroprojecteurs sont utilisés en tant que téléviseur.

Ces rétroprojecteurs peuvent présenter un écran de grande taille, ce qui est apprécié par les utilisateurs. En contrepartie, la grande taille de l'écran rend le rétroprojecteur difficilement transportable.

L'invention vise à remédier à cet inconvénient en proposant un rétroprojecteur plus facilement transportable.

Elle a donc pour objet un rétroprojecteur selon la revendication 1 annexée.

La possibilité de modifier la taille de l'écran permet, par exemple, de diminuer la taille de l'écran quand il faut le transporter et donc de diminuer l'encombrement global du rétroprojecteur. Au contraire, l'écran peut être agrandi lorsque le rétroprojecteur n'est pas transporté. Ainsi, ce rétroprojecteur préserve les avantages des rétroprojecteurs existants tout en étant plus faciles à transporter.

De plus, la possibilité de projeter des images sur l'écran aussi bien lorsque celui-ci est dans sa position rétractée qu'étendue, offre à l'utilisateur de nouvelles fonctionnalités. Par exemple, au lieu de zoomer sur un détail de l'image pour agrandir ce détail, l'utilisateur peut agrandir l'ensemble de l'image en agrandissant la taille de l'écran. A l'inverse, l'utilisateur peut décider de diminuer la taille des images en diminuant la taille de l'écran pour une utilisation mobile telle que dans les transports en commun.

Les modes de réalisation de ce rétroprojecteur peuvent comporter une ou plusieurs des caractéristiques définies dans les revendications dépendantes.

Ces modes de réalisation du rétroprojecteur présentent en outre les avantages suivants :
- utiliser une toile étirable permet d'agrandir l'écran sans avoir recours à un enrouleur ou à un autre mécanisme de ce type pour enrouler ou dérouler la toile ;
- utiliser un matériau étirable ayant un module de Young faible, c'est-à-dire inférieur à 5 GPa permet de réduire l'effort que doit réaliser l'utilisateur pour agrandir l'écran ;
- l'utilisation d'un dispositif de réglage de l'angle d'ouverture du faisceau lumineux permet d'adapter la taille de l'image a la position de l'écran ;
- l'utilisation d'un dispositif de traitement de l'image initiale à projeter permet d'éviter d'avoir recours à un dispositif optique de réglage de l'angle d'ouverture du faisceau lumineux projetant l'image ;
- conserver l'angle d'ouverture du faisceau lumineux projetant les images constant permet de simplifier la réalisation du rétroprojecteur ;
- adapter automatiquement la taille des images en fonction de la position de l'écran facilite l'utilisation du rétroprojecteur.

L'invention sera mieux comprise à la lecture de la description qui va suivre, donnée uniquement à titre d'exemple non limitatif et faite en se référant aux dessins sur lesquels :
- les figures 1 et 2 sont des illustrations schématiques en vue de côté d'un rétroprojecteur dans des positions, respectivement, rétractée et étendue ;
- les figures 3 et 4 sont des illustrations schématiques en vue de face d'un écran du rétroprojecteur des figures 1 et 2 dans les positions, respectivement, rétractée et étendue ;
- la figure 5 est une illustration schématique d'un mécanisme de verrouillage de la position de l'écran ;
- la figure 6 est une illustration schématique d'un écran extensible dans deux directions orthogonales ;
- les figures 7 et 8 sont des illustrations schématiques, respectivement, en vue de dessus et en coupe transversale d'un autre mode de réalisation d'un rétroprojecteur pourvu d'un écran extensible;
- les figures 9 et 10 sont des illustrations schématiques de deux autres modes de réalisation possibles d'un rétroprojecteur équipé d'un écran extensible ; et
- les figures 11 et 12 sont des illustrations schématiques d'une section transversale d'un faisceau lumineux projetant les images sur l'écran du rétroprojecteur de la figure 10.

Dans ces figures, les mêmes références sont utilisées pour désigner les mêmes éléments.

Dans la suite de cette description, les caractéristiques et fonctions bien connues de l'homme du métier ne sont pas décrites en détail.

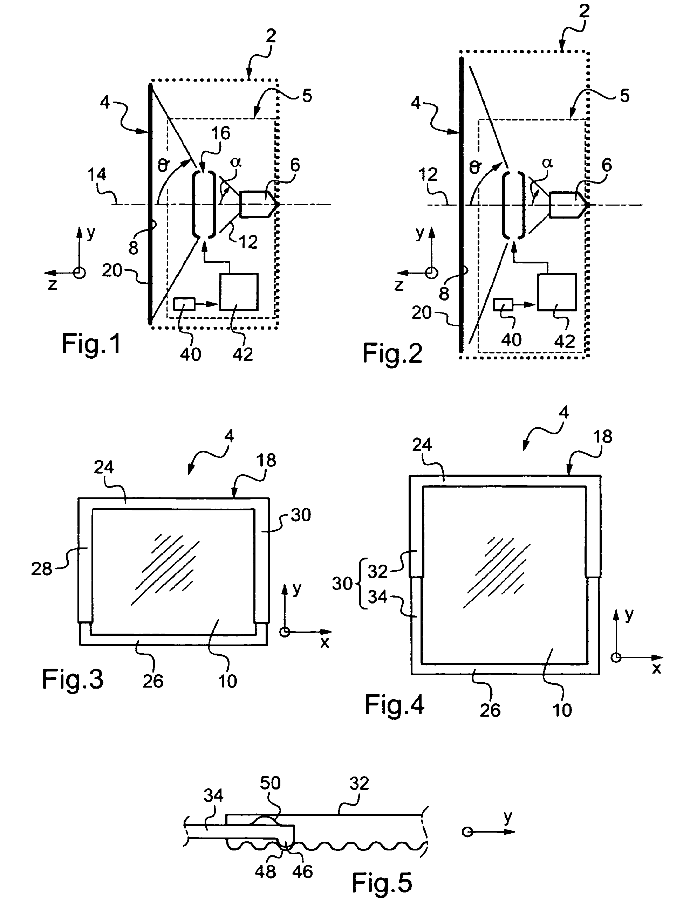

Les figures 1 et 2 représentent un rétroprojecteur 2 équipé d'un écran 4. L'écran 4 s'étend dans un plan parallèle à une direction horizontale X et à une direction verticale Y. Les directions X et Y sont orthogonales. L'écran 4 est représenté plus en détail sur les figures 3 et 4. Dans les figures 1 et 3, l'écran est dans une position rétractée et dans les figures 2 et 4 l'écran est dans une position étendue.

Le rétroprojecteur 2 comporte un appareil 5 de projection d'images sur une face arrière 8 d'une toile translucide 10 de l'écran 4. Les images ainsi projetées sont destinées à être directement visualisées par les utilisateurs sur une face avant 20 de cette toile 10.

A cet effet, l'appareil 5 comprend un projecteur 6 et un dispositif optique 16. Le projecteur 6 génère un faisceau lumineux 12 le long d'un axe optique 14 avec un angle d'ouverture constant α. L'axe 14 s'étend dans une direction Z perpendiculaire aux directions X et Y. L'angle d'ouverture α est l'angle entre l'axe optique 14 et le rayon le plus écarté de l'axe optique qui entre dans le dispositif 16. Le dispositif 16 permet de régler l'angle d'ouverture du faisceau 12. Ici, le dispositif 16 modifie l'angle d'ouverture α en un angle d'ouverture θ réglable. L'angle d'ouverture θ est l'angle entre l'axe optique 14 et le rayon le plus écarté de cet axe optique qui entre en contact avec la périphérie de la toile 10. L'amplitude de la variation de l'angle θ entre la position rétractée et la position étendue sera d'au moins 10° et de préférence d'au moins 25°, 30°, 50° ou 80°. La valeur maximale de l'angle θ sera par exemple au moins égale à 30° et de préférence égale à 50° ou 80°. En effet, plus la valeur maximale de l'angle θ est importante, plus l'encombrement du rétroprojecteur 2 peut être réduit.

De façon similaire, pour réduire l'encombrement du rétroprojecteur 2, le projecteur 6 présente des dimensions aussi faibles que possible. Par exemple, la plus grande dimension du projecteur 6 est inférieure à 3 cm et de préférence inférieure à 2 cm.

Le projecteur 6 produit par exemple une luminance de l'ordre de 10 lumens sur un écran de 20 cm de diagonale. Le projecteur 6 peut être réalisé à partir d'un écran LCD transmissif ou réflectif ou d'autres technologies telles que des technologies à base de micro-miroirs ou de MEMS (Micro-ElectroMechanical Systems) éclairés par laser.

L'écran 4 est déplaçable entre une position rétractée représentée sur la figure 3 et une position étendue représentée sur la figure 4. Pour cela, l'écran 4 comprend un cadre extensible 18 sur lequel est tendue la toile 10. Dans ce mode de réalisation, la toile 10 est étirable. A cet effet, la toile 10 est réalisée dans un matériau dont la limite de rupture est au moins supérieure à 10 % et, de préférence, supérieure à 30 %, 100 % ou 200 %.

La limite de rupture est l'étirement maximal dans une direction d'étirement donnée qui peut être obtenu avant que la toile ne se déchire ou ne se casse. Cette limite est exprimée par l'écart entre la longueur de la toile étirée et la longueur de la toile relaxée dans la direction d'étirement, cet écart étant exprimé en pourcentage de la longueur de la toile relaxée.

La toile est également réalisée dans un matériau élastique dont la limite d'élasticité est égale à plus ou moins 5 % près la limite de rupture. Ainsi, la toile étirée peut revenir à sa position relaxée sans subir de déformation permanente.

Le module de Young du matériau utilisé pour réaliser la toile 10 est également faible, c'est-à-dire qu'il est inférieur à 5 GPa et de préférence inférieur à 2 GPa. Ainsi, l'effort que doit produire l'utilisateur pour étirer cette toile reste faible.

Par exemple, la toile 10 est réalisée dans un matériau élastomère tel que du latex, du polyuréthane, du néoprène, du polyacrylique.

Ici, le cadre 18 est conçu pour étirer la toile uniquement dans la direction Y. La toile 10 est donc fixée sans aucun degré de liberté d'une part à un montant horizontal supérieur 24 et d'autre part à un montant horizontal inférieur 26 du cadre 18. Ces montants 24 et 26 sont espacés l'un de l'autre par des montants verticaux télescopiques 28 et 30. Ces montants sont disposés le long de la périphérie de la toile 10.

Les montants verticaux 28 et 30 peuvent être déployés entre la position rétractée de la figure 3 et la position étendue de la figure 4. Par exemple, à cet effet, les montants 28 et 30 sont identiques et seul le montant 28 sera décrit ici plus en détail. Le montant 28 comprend une glissière 32 à l'intérieur de laquelle coulisse un coulisseau 34 le long de la direction Y. L'extrémité supérieure de la glissière 32 est fixée sans aucun degré de liberté au montant 24 tandis que l'extrémité inférieure du coulisseau 34 est fixée sans aucun degré de liberté au montant 26.

L'appareil 5 comporte également un capteur 40 de la position de l'écran 4 et une unité 42 de commande du dispositif 16. L'unité 42 adapte automatiquement l'angle θ en fonction de la mesure de la position de l'écran 4 pour que la taille de l'image projetée occupe en permanence au moins 90% et au plus 100% de la surface de la face 8.

Le cadre 18 comprend également un mécanisme de verrouillage de l'écran dans sa position rétractée, dans sa position étendue et dans de multiples positions intermédiaires entre ces deux positions extrêmes. Un exemple d'un tel mécanisme est représenté schématiquement sur la figure 5.

L'extrémité du coulisseau 34 présente un bossage 46 apte à coopérer avec une rainure 48 correspondante formée dans la glissière 32 pour verrouiller la position de l'écran 4. Ici, la glissière 32 comprend une succession de rainures parallèles et similaires à rainure 48 le long de la direction Y. Par exemple, le bossage 46 est sollicité à l'intérieur de la rainure 48 par une lame ressort 50. Lorsque l'utilisateur écarte les montants 24 et 26, la force qu'il exerce est suffisante pour faire passer le bossage 46 de la rainure 48 à la rainure suivante. Lorsque l'utilisateur arrête d'exercer son effort, la lame ressort 50 maintient le bossage 46 à l'intérieur d'une rainure, ce qui assure le verrouillage de la position de l'écran 4.

Lors de son transport, l'écran 4 du rétroprojecteur 2 est placé dans sa position rétractée de manière à diminuer l'encombrement du rétroprojecteur 2. Dans cette position, l'unité 42 diminue automatiquement la valeur de l'angle θ pour que la taille de l'image projetée corresponde aux dimensions de la toile 10. Lorsque l'utilisateur le souhaite, celui-ci tire sur l'un des montants 24 ou 26 de manière à étirer la toile 10 jusqu'à atteindre la position souhaitée. Le capteur 40 mesure alors la nouvelle position de l'écran 4 et transmet cette information à l'unité 42 qui commande automatiquement une augmentation de la valeur de l'angle θ de manière à adapter la taille de l'image à la surface de la toile 10. Ainsi, l'utilisateur peut mettre à profit la possibilité d'agrandir l'écran 4 pour agrandir les images regardées.

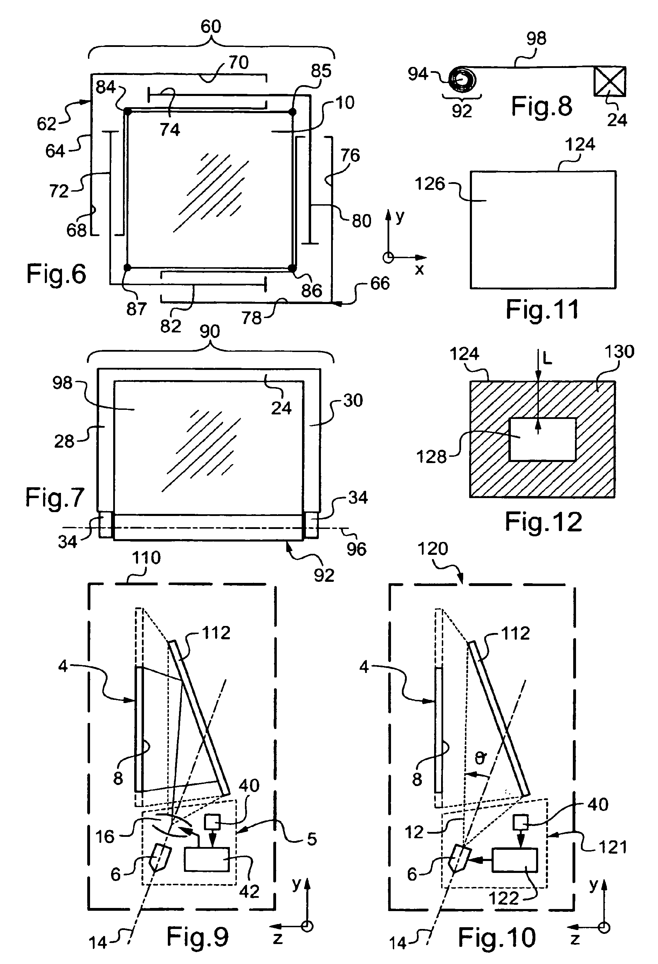

La figure 6 représente un autre écran 60 utilisable à la place de l'écran 4. L'écran 60 est extensible à la fois dans les directions Y et X. Cet écran comprend un cadre 62. Le cadre 62 est formé de deux équerres diagonalement opposées 64 et 66. L'équerre 64 comprend deux glissières 68, 70 disposées perpendiculairement l'une à l'autre. Des coulisseaux 72, 74 sont montés à coulissement à l'intérieur, respectivement, des glissières 68 et 70 le long des directions Y et X.

De façon similaire, l'équerre 66 comprend une glissière verticale 76 et une glissière horizontale 78 à l'intérieur desquelles sont montés à coulissement, respectivement, des coulisseaux 80 et 82.

L'extrémité supérieure du coulisseau 80 est fixée à angle droit sans aucun degré de liberté à l'extrémité droite du coulisseau 74. L'extrémité gauche du coulisseau 82 est fixée à angle droit sans aucun degré de liberté à l'extrémité inférieure du coulisseau 72. La toile 10 est fixée à chaque angle du cadre 62 par des points d'attachement 84 à 87. Ainsi, l'écran peut être agrandi en tirant sur les équerres 62 et 66 soit dans l'une des directions X et Y soit dans les deux directions en même temps.

Les figures 7 et 8 représentent un autre écran 90 utilisable en lieu et place de l'écran 4. Cet écran 90 est par exemple identique à l'écran 4 à l'exception du fait que le montant 26 est remplacé par un enrouleur 92 d'une toile translucide 98.

L'enrouleur 92 comprend un rouleau 94 monté à rotation autour d'un axe horizontal 96. A cet effet, chacune des extrémités du rouleau 94 est reçue dans un palier correspondant solidaire d'une extrémité inférieure du coulisseau 34. L'extrémité de la toile 98 est fixée d'un côté au rouleau 94 et de l'autre côté au montant 24. Cette toile 98 est enroulée, par exemple sur plusieurs tours, autour du rouleau 94 lorsque l'écran est dans sa position rétractée. Ainsi, quand le montant 24 est éloigné du rouleau 94, la toile 98 se déroule et la surface de l'écran s'agrandit. Dans ce mode de réalisation, il n'est pas nécessaire que la limite de rupture de la toile 98 soit supérieure à 10 % ou que la toile 96 présente une bonne élasticité. De préférence, le rouleau 94 est associé à des moyens élastiques permettant de tendre, sans consommation d'énergie électrique, la toile 98 sur le cadre.

La figure 9 représente un autre mode de réalisation d'un rétroprojecteur 110.

Le rétroprojecteur 110 est identique au rétroprojecteur 2 à l'exception du fait que l'axe optique 14 est incliné par rapport à la direction Z. Par exemple, l'angle entre l'axe 14 et la direction Y est égal à 0° à plus ou moins 45° près.

Pour diriger le faisceau lumineux 12 sur la face 8 de l'écran 4, le rétroprojecteur 110 comprend un miroir 112. Ici, le miroir 112 est immobile par rapport à l'axe 14.

Sur la figure 9, la position étendue de l'écran 4 est représentée en pointillés tandis que sa position rétractée est représentée en ligne continue. De façon similaire, le faisceau lumineux projeté sur l'écran 4 dans sa position étendue est représenté en pointillés tandis qu'il est représenté en trait continu lorsque l'écran 4 est dans sa position rétractée.

Cette disposition du projecteur 6 par rapport à l'écran 4 limite l'encombrement du rétroprojecteur 110 dans la direction Z.

La figure 10 représente un autre mode de réalisation d'un rétroprojecteur 120. Ce rétroprojecteur 120 est identique au rétroprojecteur 110 à l'exception du fait que le dispositif 16 a été omis et que l'appareil 5 et remplacé par un appareil 121 de projection d'images. L'appareil 121 est identique à l'appareil 5 sauf que l'unité 42 de commande est remplacée par une unité 122 de traitement d'images apte à générer les images projetées par le projecteur 6. Dans ce mode de réalisation, l'angle d'ouverture θ du faisceau 12 projeté est constant quelle que soit la position de l'écran 4. La section transversale du faisceau 12 est constante. Cette section transversale est représentée par un rectangle 124 sur la figure 11. L'ange θ constant est choisi de manière à ce que le faisceau 12 éclaire la totalité de la face 8 après avoir été réfléchi sur le miroir 112 lorsque l'écran est dans sa position étendue.

L'unité 122 reçoit l'image initiale à projeter sur la face 8 de l'écran 4 et les mesures réalisées par le capteur 40. Si les mesures du capteur 40 indiquent que la taille de l'écran 4 a été modifiée, alors l'unité 122 traite l'image initiale de manière à ce que celle-ci occupe plus de 90% et moins de 100% de la surface de la face 8. A cet effet, par exemple, l'unité 122 réduit l'image 126 de manière à obtenir une réduction 128 (voir figure 12) de cette image et l'entoure de bandeaux 130 destinés à être projetés en dehors de la face 8 de l'écran 4. Par exemple, les bandeaux 130 sont des bandeaux noirs.

Dans ces conditions, comme représenté sur la figure 12, la réduction 128 occupe uniquement une partie centrale de la section transversale 124. Les dimensions de la réduction 128 sont choisies de manière à ce que cette réduction 128 soit projetée sur la face arrière 8 tandis que les bandeaux 130 sont projetés en dehors de la face arrière 8. Ainsi, dans ce mode de réalisation, il n'est pas nécessaire de régler l'angle d'ouverture θ. A la place, seule la largeur L des bandeaux 130 est réglée.

De nombreux autres modes de réalisation sont possibles. Par exemple, d'autres mécanismes d'extension du cadre peuvent être conçus tels qu'un cadre dans lequel les montants 28 et 30 sont remplacés par des montants réalisés dans un matériau élastomère.

Dans le cas où la toile est étirable dans une seule direction d'étirement, il est possible de prévoir un mécanisme de maintien en contact des bords de la toile et des montants du cadre parallèles à cette direction d'étirement. Ce mécanisme empêche ou réduit la rétractation de la toile dans la direction perpendiculaire à la direction d'étirement.

D'autres mécanismes de verrouillage sont également possibles. Par exemple, le verrouillage du cadre dans sa position rétractée ou dans sa position étendue peut être obtenu par le déplacement d'un pion ou à l'aide d'une vis de serrage. Le mécanisme de verrouillage détermine le nombre de positions verrouillables de l'écran. Ce nombre de positions peut être limité à deux positions extrêmes telles que la position rétractée et une seule position étendue.

En variante la taille de l'image projetée est réglée manuellement par l'utilisateur. Dans ce cas, le capteur 40 peut être omis.

Le déplacement du cadre entre ses positions rétractée et étendue peut être motorisé à l'aide d'un actionneur électrique commandable par l'utilisateur.

Le contenu de l'image projetée peut également être modifié en fonction de la position de l'écran mesurée par un capteur. Par exemple, dans la position rétractée l'image est uniquement constituée d'une illustration initiale qui occupe l'essentiel de la surface de la toile. Dans la position étendue, l'image projetée comporte la même illustration initiale complétée avec des illustrations complémentaires. Par exemple, les illustrations complémentaires sont disposées dans la partie supplémentaire de la surface de la toile qui est apparue suite au déplacement vers la position étendue. De préférence, les dimensions de l'illustration initiale sur l'écran sont les mêmes dans les positions rétractée et étendue. Ainsi, un déplacement de l'écran vers sa position étendue permet d'accéder aux illustrations complémentaires. Ceci peut être appliqué à la consultation d'un plan d'un centre ville et de ses banlieues. L'illustration initiale est le plan du centre ville uniquement. Les illustrations complémentaires sont les plans des banlieues. Dans cette application, en déplaçant l'écran de sa position rétractée vers sa position étendue, l'utilisateur accède à plus d'informations, c'est-à-dire aux plans des banlieues.

## Revendications

1. Rétroprojecteur comprenant :
- un écran (4 ; 60) équipé d'un cadre (18 ; 62) et d'une toile translucide (10) fixée sur des montants de ce cadre, la toile translucide présentant une face avant sur laquelle s'affichent des images et une face arrière sur laquelle sont projetées les images, et
- un appareil (5 ; 121) de projection des images sur la face arrière de la toile translucide,
**caractérisé en ce que**
- le cadre de l'écran (4 ; 60) est extensible entre une position rétractée et une position étendue dans laquelle la surface de la toile étirable est augmentée d'au moins 10 % par rapport à la surface de la toile dans sa position rétractée,
- le rétroprojecteur comprend un capteur (40) de la position de l'écran, et
- l'appareil (5 ; 121) de projection est apte à adapter automatiquement la taille des images projetées aussi bien à la position rétractée qu'à la position étendue de l'écran en fonction de la position mesurée par le capteur.

2. Rétroprojecteur selon la revendication 1, dans lequel la toile (10) est réalisée dans un matériau étirable dont la limite de rupture est au moins supérieure à 10 % et, de préférence, supérieure à 30 %.

3. Rétroprojecteur selon la revendication 2, dans lequel le matériau étirable a un module de Young inférieur à 5 GPa et, de préférence, inférieur à 2 GPa.

4. Rétroprojecteur selon l'une quelconque des revendications précédentes, dans lequel l'appareil (5) de projection comprend un dispositif (16) de réglage de l'angle d'ouverture d'un faisceau lumineux projetant les images sur la face arrière de la toile pour adapter la taille des images projetées à la position de l'écran.

5. Rétroprojecteur selon l'une quelconque des revendications précédentes, dans lequel l'appareil (121) de projection comporte un dispositif (122) de traitement de l'image initiale à projeter apte à générer une nouvelle image à projeter contenant une réduction (128) de l'image initiale entourée d'un bandeau (130) destiné à être projeté en dehors de la périphérie de la face arrière de la toile, la largeur du bandeau étant réglable pour adapter la taille de la réduction à la position de l'écran.

6. Rétroprojecteur selon la revendication 5, dans lequel l'angle d'ouverture du faisceau lumineux projetant les images sur la face arrière de la toile est constant quelle que soit la position de l'écran.

7. Rétroprojecteur selon l'une quelconque des revendications précédentes, dans lequel le rétroprojecteur comprend un mécanisme de verrouillage de la position de l'écran dans au moins une position intermédiaire entre la position rétractée et la position la plus étendue.

8. Rétroprojecteur selon l'une quelconque des revendications précédentes, dans lequel le rétroprojecteur a la possibilité de projeter des images sur l'écran (4 ; 60 ; 90) lorsque celui-ci est dans sa position rétractée.

9. Rétroprojecteur comprenant :
- un écran (90) équipé d'un cadre et d'une toile translucide (98) fixée d'un côté à un montant (24) de ce cadre et l'autre côté à un rouleau (94) de ce cadre autour duquel est enroulé la toile (98) lorsque l'écran est dans une position rétractée, la toile translucide présentant une face avant sur laquelle s'affichent des images et une face arrière sur laquelle sont projetées les images, et
- un appareil (5 ; 121) de projection des images sur la face arrière de la toile translucide,
**caractérisé en ce que**
- le cadre de l'écran (90) est déplaçable entre la position rétractée et une position étendue en éloignant le montant (24) du rouleau (94) pour que la toile se déroule et que l'écran s'agrandisse, dans la position étendue la surface de la toile étant augmentée d'au moins 10 % par rapport à la surface de la toile dans sa position rétractée grâce à l'agrandissement de l'écran ainsi obtenu,
- le rétroprojecteur comprend un capteur (40) de la position de l'écran, et
- l'appareil (5 ; 121) de projection est apte à adapter automatiquement la taille des images projetées aussi bien à la position rétractée qu'à la position étendue de l'écran en fonction de la position mesurée par le capteur.

## Claims

1. Overhead projector comprising:
- a screen (4;60) equipped with a frame (18 ; 62)) and a translucent panel (10) fixed to uprights of this frame, the translucent panel having a front face on which the images are displayed and a rear face on which the images are projected, and
- an apparatus (5_{;}121) for projecting images on the rear face of the translucent panel
**characterized in that**:
- the frame of the screen (4;60) is extensible between a retracted position and a stretched position in which the surface area of the stretchable panel is increased by at least 10% relatively to the surface area of the panel in its retracted position, and
- the overhead projector comprises a sensor (40) of the position of the screen, and
- the projection apparatus (5;121) is capable of automatically adapting the size of the projected images to the retracted position as well as to the stretched position of the screen according to the position measured by the sensor.

2. Overhead projector according to claim 1, wherein the panel (10) is made out of a stretchable material whose breaking point is at least greater than 10% and preferably greater than 30%.

3. Overhead projector according to claim 2, wherein the stretchable material has a Young's modulus of less than 5 GPa and preferably less than 2 GPa.

4. Overhead projector according to any one of the preceding claims, wherein the projection apparatus (5) has a device (16) for adjusting the aperture angle of a light beam projecting images on the rear face of the panel to adapt the size of the projected images to the position of the screen.

5. Overhead projector according to any one of the preceding claims, wherein the projection apparatus (121) has a device (122) for processing the initial image to be projected capable of generating a new image to be projected containing a reduction (128) of the initial image surrounded by a band (130) designed to be projected outside the periphery of the rear face of the panel, the width of the band being adjustable to match the size of the reduction to the position of the screen.

6. Overhead projector according to claim 5, wherein the aperture angle of the light beam projecting the images on the rear face of the panel is constant whatever the position of the screen.

7. Overhead projector according to any one of the preceding claims, wherein the overhead projector has a mechanism for locking the position of the screen in at least one intermediate position between the retracted position and the most stretched position.

8. Overhead projector according to any one of the preceding claims, wherein the overhead projector has the possibility of projecting images on the screen (4 ; 60 ; 90) when the latter is in its retracted position.

9. Overhead projector comprising:
- a screen (90) equipped with a frame and a translucent panel (98) fixed by one side to an upright (24) of this frame and by the other side to a roller (94) of this frame around which the panel (98) is wound when the screen is in a retracted position, the translucent panel having a front face on which the images are displayed and a rear face on which the images are projected, and
- an apparatus (5;121) for projecting images on the rear face of the translucent panel,
**characterized in that**:
- the frame of the screen (90) can be shifted between the retracted position and a stretched position in moving the upright (24) to a distance from the roller (94) so that the panel gets unfolded and the screen gets enlarged in the extended position, the surface area of being increased by at least 10% relatively to the surface area of the panel in its retracted position as a result of the enlargement of the screen thus obtained,
- the overhead projector comprises a sensor (40) of the position of the screen, and
- the projection apparatus (5;121) is capable of automatically adapting the size of the projected images to the retracted position as well as to the stretched position of the screen according to the position measured by the sensor.

## Patentansprüche

1. Overheadprojektor, umfassend:
- einen Bildschirm (4; 60), der mit einem Rahmen (18; 62) und einer durchscheinenden Leinwand (10; 98) ausgestattet ist, die auf dem Ständer des Gerippes dieses Rahmens befestigt ist, wobei die durchscheinende Leinwand eine Vorderseite aufweist, auf der Bilder angezeigt werden, und eine Rückseite, auf die die Bilder projiziert werden, und
- ein Projektionsgerät (5; 121) der Bilder auf der Rückseite der durchscheinenden Leinwand,
**dadurch gekennzeichnet, dass**
der Rahmen des Bildschirms (4; 60; 90) zwischen einer eingezogenen Position und einer ausgezogenen Position, in der die Fläche der dehnbaren Leinwand um wenigstens 10 % im Verhältnis zur Oberfläche der dehnbaren Leinwand in ihrer eingezogenen Position erhöht ist, ausziehbar ist,
- der Overheadprojektor einen Sensor (40) der Position des Bildschirms umfasst und
- das Projektionsgerät (5; 121) geeignet ist, die Größe der projizierten Bilder automatisch sowohl an die eingezogene Position als auch an die ausgezogene Position des Bildschirms in Abhängigkeit von der durch den Sensor gemessenen Position anzupassen.

2. Overheadprojektor gemäß Anspruch 1, in dem die Leinwand (10) aus einem dehnbaren Material realisiert ist, dessen Bruchgrenze höher als wenigstens 10 % und bevorzugt höher als 30 % ist.

3. Overheadprojektor gemäß Anspruch 2, in dem das dehnbare Material ein Young-Modell von weniger als 5 GPa und bevorzugt von weniger als 2 GPa hat.

4. Overheadprojektor gemäß einem der vorherigen Ansprüche, in dem das Projektionsgerät (5) eine Einstellvorrichtung (16) des Öffnungswinkels eines Lichtbündels umfasst, das die Bilder auf die Rückseite der Leinwand projiziert, um die Größe der projizierten Bilder an die Position des Bildschirms anzupassen.

5. Overheadprojektor gemäß einem der vorherigen Ansprüche, in dem das Projektionsgerät (121) eine Bearbeitungsvorrichtung (122) des zu projizierenden ursprünglichen Bildes umfasst, die geeignet ist, ein neues zu projizierendes Bild zu generieren, das eine Verkleinerung (128) des ursprünglichen Bildes enthält, das mit einer Blende (130) umgeben ist, die dazu bestimmt ist, außerhalb der Peripherie der Rückseite der Leinwand projiziert zu werden, wobei die Breite der Blende einstellbar ist, um die Größe der Verkleinerung an die Position des Bildschirms anzupassen.

6. Overheadprojektor gemäß Anspruch 5, in dem der Öffnungswinkel des Lichtbündels, das die Bilder auf die Rückseite der Leinwand projiziert, unabhängig von der Position des Bildschirms konstant ist.

7. Overheadprojektor gemäß einem der vorherigen Ansprüche, in dem der Overheadprojektor einen Verriegelungsmechanismus der Position des Bildschirms in wenigstens einer Zwischenposition zwischen der eingezogenen Position und der am weitesten ausgezogenen Position umfasst.

8. Overheadprojektor gemäß einem der vorherigen Ansprüche, in dem der Overheadprojektor die Möglichkeit hat, Bilder auf den Bildschirm (4; 60; 90) zu projizieren, wenn dieser sich in seiner eingezogenen Position befindet.

9. Overheadprojektor, umfassend:
- einen Bildschirm (90), der mit einem Rahmen und einer durchscheinenden Leinwand (98) ausgestattet ist, die auf einer Seite an einem Ständer (24) dieses Rahmens und auf der anderen Seite an einer Rolle (94) dieses Rahmens befestigt ist, um die die Leinwand (98) aufgerollt ist, wenn der Bildschirm sich in der eingezogenen Position befindet, wobei die durchscheinende Leinwand eine vordere Seite aufweist, auf der Bilder angezeigt werden, und eine hintere Seite, auf die die Bilder projiziert werden, und
- ein Projektionsgerät (5; 12) der Bilder auf der hinteren Seite der durchscheinenden Leinwand,
**dadurch gekennzeichnet, dass**
- Der Rahmen des Bildschirms (90) zwischen der eingezogenen Position und einer ausgezogenen Position durch die Entfernung des Ständers (24) der Rolle (94) verschiebbar ist, damit die Leinwand sich entwickelt und der Bildschirm sich vergrößert, wobei die Fläche der Leinwand in der ausgezogenen Position um mindestens 10 % im Verhältnis zur Fläche der Leinwand in ihrer eingezogenen Position dank der auf diese Weise erhaltenen Vergrößerung des Bildschirms vergrößert ist,
- Der Overheadprojektor einen Sensor (40) der Position des Bildschirms umfasst und
- Das Projektionsgerät (5; 12) geeignet ist, um sich automatisch an die Größe der Bilder anzupassen, die sowohl in der eingezogenen Position als auch in der ausgezogenen Position des Bildschirms in Abhängigkeit von der vom Sensor gemessenen Position projiziert werden.
